# EUROPEAN PATENT SPECIFICATION

(11) **EP 2 319 602 B1**
(45) Date of publication and mention of the grant of the patent: **25.12.2013**
(21) Application number: 10189750.2
(22) Date of filing: 03.11.2010
(51) Int. Cl.: B01D 46/10, B01D 46/52, B01D 46/00

(54) **Filter assembly for a vehicle heating or air conditioning system, filter unit for this purpose and method for the production of the filter assembly.**
Filterbaugruppe einer Fahrzeugheizungs- oder Klimaanlage, Filtereinheit hierfür und Verfahren zur Herstellung der Filterbaugruppe
Ensemble filtrant pour chauffage de véhicule ou système de climatisation, unité filtrante à ces fins et procédé de production de l'ensemble filtrant

(30) Priority: 05.11.2009 DE 102009051987
(43) Date of publication of application: 11.05.2011
(73) Proprietor: Valeo Klimasysteme GmbH, 96476 Rodach (DE)
(72) Inventor: Gartner, Stefan, 96476 Bad Rodach (DE); Ludwig, Steffen, 98701, Grossbreitenbach (DE); Rohowsky, Norbert, 96450, COBURG (DE)
(74) Representative: Vieillevigne, Sébastien Nicolas Bernard

(56) References cited:
- EP-A1- 1 334 757
- EP-A1- 1 616 736
- EP-A1- 1 894 610
- WO-A1-2008/055971
- DE-A1- 19 548 197
- DE-U1- 20 313 468
- DE-U1-202006 017 102
- JP-A- 8 108 015
- JP-A- 2009 262 830
- US-A- 4 976 857

## Description

The invention relates to a filter assembly for a vehicle heating or air conditioning system, having a filter unit, through which there is a flow in a direction of flow, which is substantially cuboidal in a delivery condition, in which it is not installed in the filter assembly, and which, in the delivery condition, has a substantially rectangular cross section of flow, an upper edge, a lower edge and opposite lateral edges, and having a filter holding housing, into which the filter unit is releasably inserted.

Filters assemblies are known from documents JP 2009 262830, US 4 976 857, DE 203 13 468, DE 195 48 197, EP 1 894 610, JP 8 108015, EP 1 334 757 and DE 20 2006 017102.

The invention furthermore relates to a filter unit for installation in the filter assembly according to the invention and to a method for the production of the filter assembly.

Vehicle heating and air conditioning systems, referred to as HVAC systems, also comprise a filter assembly with a filter holding housing, which is generally a fixed part of the HVAC system. The filter assembly furthermore includes a removable filter unit, which can be inserted into the filter holding housing and removed again for replacement non-destructively.

Owing to the difficult situation with respect to installation space, it is increasingly becoming necessary that the filter unit should no longer have a rectangular cross section, when viewed in the direction of flow, and hence should no longer have a cuboidal shape but should form a pentagon when viewed in cross section or, more precisely, a rectangle with one corner "cut off". Filter units of this kind are expensive to produce.

It is an object of the invention to provide a filter assembly which can be produced at lower cost and has an improved filter unit. The intention is furthermore also to specify an economical method for the production of a filter assembly according to the invention.

The object is achieved, in the case of a filter assembly according to the invention,by the characteristics of a claim 1.

In particular, in the installed condition, the filter unit is squeezed at least at one of the edges of the filter unit transversely, i.e. in particular perpendicularly, to the direction of flow, as compared with the delivery condition.

The no longer rectangular cross-sectional shape required by the filter holding housing is brought about by deformation, in particular elastic deformation, of the filter unit, which is still rectangular in the delivery condition. As a result, the filter unit itself can be produced in a very simple and economical manner. Moreover, it can also have advantages in terms of sealing if such a deformation of the filter unit takes place in the filter holding housing, since there is then a press fit.

According to the preferred embodiment, at most some of the edges of the filter unit are undeformed in the installed condition. This means that one to three edges are deformed. Preferably, just one edge is deformed, and thus one side is tilted inward as it were.

According to the invention, in the installed condition, the filter unit has a trapezoidal cross section in a plane transverse to the direction of flow. The trapezoid does not have to have opposite sides of equal length.

It can furthermore be possible, in the installed condition, for the filter unit to be bent in the direction of flow to enable it to adapt to the shape of the filter holding housing in a further plane.

The filter unit has a filter element and a filter element frame.

Provision is made for the filter element frame to be at least partially flexible. Of course, this flexibility applies only to the forces required for the insertion of the filter unit into the filter holding housing and not, for instance, to additional forces. The flexibility preferably relates exclusively to the ability of frame sections to be squeezed along the associated filter edges.

The filter unit has at least one folded filter (in particular made of paper), the filter unit being deformed transversely to the longitudinal extent of the folds in the installed condition, with the result that the folds are not bent but that adjacent folds are merely pushed closer together, as in the case of a concertina that has been partially compressed in an oblique orientation.

A further embodiment of the invention provides for the filter housing to be open on one side, preferably on the underside thereof, and to have a pivotable cover on this side to enable the filter housing to be closed at the side. It is via this opening that the filter is then replaced.

The above-mentioned object of providing an economical filter unit for installation in the filter assembly according to the invention is achieved in that the filter unit has a cuboidal filter element and a filter element frame at least partially surrounding the edge of the filter element at the sides. The filter element frame has sections of different stiffness and/or is designed as an open frame, with the result that one or more of the edges are as it were embodied without a frame and the deformation can be achieved very easily in the region of these edges as the filter unit is inserted. Of course, this deformation can also be made possible through less rigid filter element frame sections.

The filter element frame can also be produced partially, but preferably completely, from a flexible material at least at one edge, or have at least one open section, that is to say can be omitted at least at one edge and be open in this area, for example. In this context, it would, of course, also be possible for adjoining edges or opposite edges to be embodied without a frame in order to achieve a filter unit with a high flexibility in these areas.

However, in order to keep the filter unit sufficiently stable, especially for assembly and transportation, two or three edges of the frame can be produced from a rigid material.

The frame is formed by a flexible band, in particular a textile band, for example.

Another embodiment envisages that the frame be produced at least partially from a cellulosic material and/or from a plastics material. Sandwich materials can also be used in this context.

The method according to the invention for the production of a filter assembly according to the invention envisages the steps according to the characteristics of claim 14.

The filter element is preferably compressed by the filter housing as the filter element is inserted into the filter housing.

Further features and advantages of the invention will become apparent from the following description and from the following drawings, to which reference is made. In the drawings
- Figure 1 shows a section through a vehicle with a filter assembly according to the invention,
- Figure 2 shows a filter unit according to the invention in the delivery condition,
- Figure 3 shows the filter assembly from Figure 1 in a detail view, and
- Figure 4 shows the filter assembly from Figure 1 in a production step.

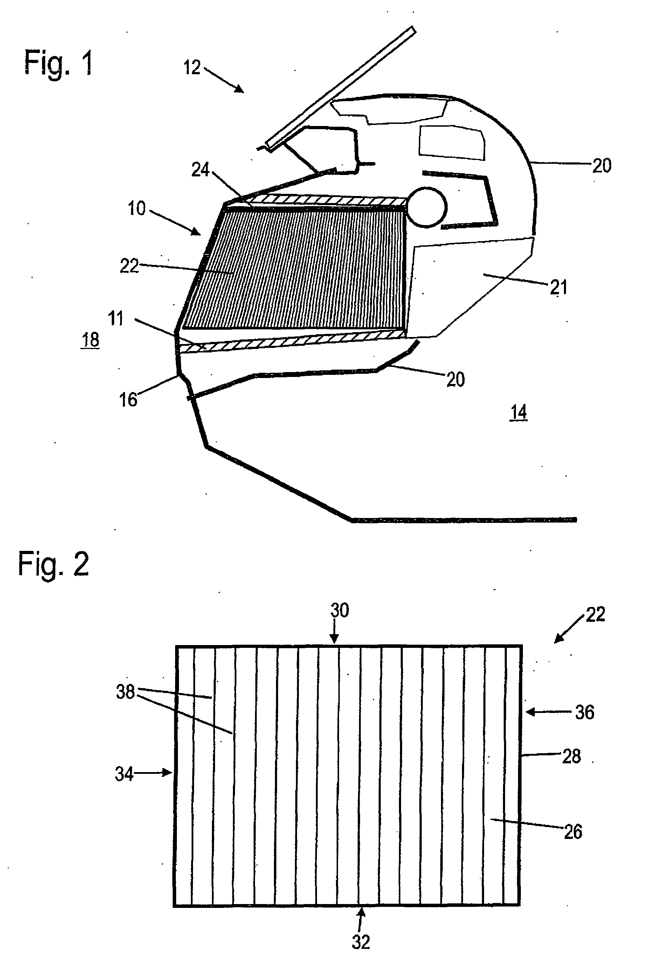

The filter assembly 10 shown in Figure 1 is part of an air conditioning system 11 (also referred to as an HVAC unit; not shown here) for a vehicle 12 and serves to clean the air before it is passed into the interior 14 of the vehicle 12. A filter assembly 10 of this kind is usually arranged downstream of a blower of the air conditioning system, but the filter assembly can also be arranged at any other position in the air conditioning system.

The air conditioning system, i.e. the HVAC unit, is preferably a preassembled assembly, which is connected to ducts in the vehicle. The filter assembly forms part of this larger assembly.

The installation space for the filter assembly is bounded, on the one hand, by the partition wall 16 with respect to the engine compartment 18, the "firewall". On the other side, the installation space is bounded with respect to the interior 14 by a multi-part cover panel 20 and storage compartments 21.

Figure 1 shows a section through the flow cross section of the filter assembly 10, i.e. here the direction of flow through the filter assembly 10 is perpendicular to the plane of the drawing. The filter assembly 10 comprises a preferably rigid filter unit 22 and a filter holding housing 24, into which the filter unit 22 can be releasably inserted.

In particular, provision can be made for the external housing of the HVAC unit to merge into the filter holding housing 24.

According to Figure 2, the filter unit 22 has a filter element 26, in this case a conventional folded filter, and a filter element frame 28, which is flexible at least in sections and which surrounds and stabilizes the filter element 26.

The filter unit 22 has an upper edge 30, a lower edge 32 and opposite lateral edges 34, 36. The direction indications relate to the installed condition. Depending on the installation conditions, the filter assembly 10 can also be installed in some other position or at a different location in the vehicle 12.

The folds 38 of the filter element 26 extend parallel to the lateral edges 34, 36.

In the delivery condition, in which it is not installed in the filter assembly, the said condition being illustrated in Figure 2, the filter element 26 has a cuboidal form, i.e. a cuboidal envelope.

The filter element frame 28 has sections of different stiffness. The section extending along the upper edge 30 can be compressed easily in the longitudinal direction (i.e. along the edge 30), or, alternatively, the frame is not present in this area or is at least not present in sections.

As a result, the filter element 26 is flexible in the direction of the upper edge 30 or of the lower edge 32, i.e. the folds 38 of the filter unit 22 can be pushed closer together in this direction. In the direction of the lateral edges 34, 36, on the other hand, the filter unit 22 is inflexible, in particular owing to the supporting frame.

As an alternative, the frame section along the lower edge 32 can also be flexible or omitted. Another alternative envisages omitting the frame section of one or both edges 34, 36 as well, or making them flexible.

According to one embodiment, the frame 28 is a flexible band, e.g. a textile band.

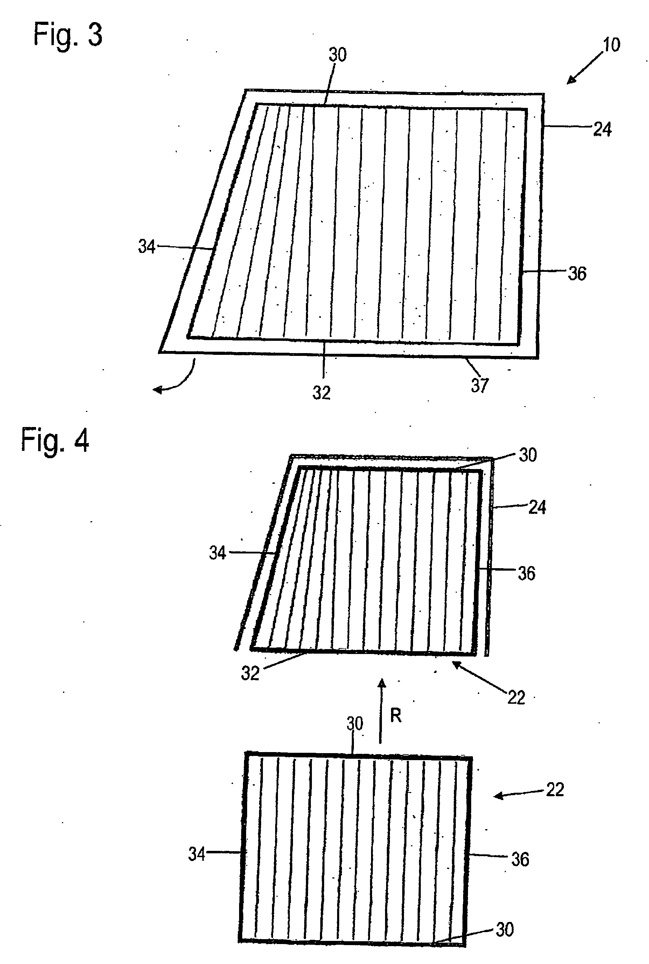

As can be seen in Figure 3, the filter holding housing 24 has a trapezoidal cross section (as seen in the direction of flow) and surrounds the filter unit 22 at three edges in the installed condition of the filter unit 22. The filter unit 22 rests with the lateral edges 34, 36 and the upper edge 30 against the filter holding housing 24. Only for the sake of distinguishing the parts, a gap is shown between the edges 30 to 36 and the housing 24 in Figure 3. It is also possible for peripheral seals to be provided on the filter unit 22 or the housing 24 in order to prevent bypass flows.

It must be possible to open the underside or some other side of the filter holding housing 24 in order to allow the filter unit 22 to be pushed into the filter holding housing, and it can be closed by a removable (e.g. pivotable) cover 37, for example, in order to fix the filter unit 22 in the filter holding housing 24. However, it is also conceivable to fix the filter unit 22 in the filter holding housing 24 in some other way.

As can be seen in Figure 3, the width of the filter holding housing 24 at the lower edge corresponds substantially to the width of the lower edge 34 of the filter unit 22, i.e. the lower edge of the filter unit is not deformed here. The upper edge 30 of the filter holding housing 24, on the other hand, is shortened relative to the upper edge 32 of the filter unit 22 by virtue of the trapezoidal shape of the filter holding housing 24, with the result that the upper edge 32 of the filter unit 22 is squeezed in the installed condition in the filter holding housing 24, in this case perpendicularly to the direction of flow, and the folds extend obliquely.

The insertion of the filter unit 22 into the filter holding housing 24 is illustrated in Figure 4. The filter unit 22 is provided with a rectangular cross section and is pushed into the filter holding housing 24 from the open underside of the said housing in a direction R of insertion. During this process, the lateral edges 34, 36 come into contact with the side walls of the filter holding housing 24 and, as insertion in direction R of insertion continues, they are forced inward by the said side walls. During this process, the upper edge of the filter unit 22 is squeezed transversely to the direction of flow, with the result that, in the installed condition, the filter unit 22 has a cross section matched to the filter holding housing 24, in the present case a trapezoidal cross section.

As a further option, it is also additionally possible for the filter unit 22 to be bent in the direction of flow when it is pushed into the housing 24.

The lateral edges 34, 36 are not squeezed or compressed and therefore the filter unit 22 has only to be of flexible design in one direction, in the present case in the direction of the upper or, if appropriate, of the lower edge 30, 32. It is therefore also conceivable that the filter element frame 28 should be of flexible design only in the area of the upper and/or of the lower edge 30, 32 and should be produced from a rigid or less flexible material, e.g. a plastics material, at the remaining two or three edges.

However, it is also possible for the filter element frame 28 to be produced from some other material, at least in sections, e.g. from a cellulosic material, or to be open at at least one edge. Finally, filter units 22 without a filter element frame 28 are conceivable.

As a departure from the trapezoidal shape illustrated here, different cross sections of the filter unit 22 in the installed condition and of the filter holding housing 24 can also be implemented here. For example, both lateral edges 34, 36 can slope in the delivery condition.

Common to all the embodiments is the fact that the filter element 22 has a cross section which is different from the delivery condition and is matched to the filter holding housing 24 when installed, and no additional work steps are required to adapt the filter unit 22 to the filter holding housing 24.

## Claims

1. Filter assembly (10) for a vehicle heating or vehicle air conditioning system, having
- a filter unit (22) having a filter element (26) with folds (38) and a filter element frame (28), and
- a filter holding housing (24) into which the filter unit (22) is releasably inserted,
in a delivery condition,
- the filter unit (22) having a substantially rectangular cross section perpendicular to the flow direction through the filter assembly (10), an upper edge (30), a lower edge (32) and opposite lateral edges (34, 36), and folds (38) of the filter element (26) extending parallel to opposite lateral edges (34, 36), and
- the filter element (26) being substantially cuboidal,
and in an installed condition,
- the filter unit (22) being compressed in such a way in the filter holding housing (24) that it has a cross section perpendicular to the flow direction through the filter assembly (10) that deviates from the delivery condition and is matched to the filter holding housing (24),
**characterized in that** the filter holding housing (24) has a trapezoidal cross section perpendicular to the flow direction through the filter assembly (10), and **in that** the filter element frame (28) is at least partially flexible at least in sections and surrounds and stabilizes the filter element (26),
the filter unit (22) being squeezed perpendicular to the flow direction during installation in the filter holding housing (24) in such a way that at least part of folds (38) are merely pushed closer together such that they are partially compressed in an oblique orientation.

2. Filter assembly according to Claim 1, **characterized in that**, in the installed condition of the filter unit (22), at least one of the edges (30, 32, 34, 36) of the filter unit (22) is squeezed transversely to the direction of flow, as compared with the delivery condition.

3. Filter assembly according to either of Claims 1 or 2, **characterized in that** at most some of the edges (30, 32, 34, 36) of the filter unit (22) are undeformed in the installed condition.

4. Filter assembly according to one of the preceding claims, **characterized in that**, in the installed condition, the filter unit (22) has a trapezoidal cross section in a plane transverse to the direction of flow.

5. Filter assembly according to one of the preceding claims, **characterized in that**, in the installed condition, the filter unit (22) is bent in the direction of flow.

6. Filter assembly according to one of the preceding claims, **characterized in that** the filter unit (22) is deformed transversely to the longitudinal extent of the folds (38) in the installed condition.

7. Filter assembly according to one of the preceding claims, **characterized in that** the filter holding housing (24) is open on one side, preferably on the underside, and has a removable cover (37) on this side to enable the filter holding housing (24) to be closed at the side.

8. Filter unit for installation in a filter assembly (10) according to one of the preceding claims, the filter unit comprising a filter element (26) with folds (38) and a filter element frame (28), and in a delivery condition, the filter unit (22) having a substantially rectangular cross section perpendicular to the flow direction through the filter assembly (10), an upper edge (30), a lower edge (32) and opposite lateral edges (34, 36), and folds (38) of the filter element (26) extending parallel to opposite lateral edges (34, 36), and in an installed condition, the filter unit (22) being compressable in such a way in the filter holding housing (24) that it has a cross section perpendicular to the flow direction through the filter assembly (10) that deviates from the delivery condition and is matchable to the filter holding housing (24), **characterized in that** the filter unit (22) is squeezable perpendicular to the flow direction during installation In the filter holding housing (24) in such a way that at least part of folds (38) are merely pushable closer together such that they are partially compressable in an oblique orientation, and **in that** the filter element frame (28) stabilizes the filter element (26) and is at least partially surrounding the filter element (26) at the edges, the filter element frame (28) having sections of different stiffness and/or being designed as an open frame.

9. Filter unit according to Claim 8, **characterized in that** the filter element frame (28) is produced from a flexible material at least at one edge (30, 32, 34, 36) or is open at least one edge (30, 32, 34, 36).

10. Filter unit according to either of Claims 8 and 9, **characterized In that** the filter element frame (28) is produced from a rigid material at two or three edges (30, 32, 34, 36).

11. Filter unit according to one of Claims 8 to 10, **characterized in that** the filter element frame (28) is produced at least partially from a flexible band, in particular a textile band.

12. Filter unit according to one of Claims 7 to 11, **characterized in that** the filter element frame (28) is produced at least partially from a cellulosic material and/or from a plastics material.

13. Method for the production of a filter assembly according to one of the preceding claims, comprising the following steps:
- provision of a filter unit (22) and of a filter holding housing (24),
- insertion and fixing of the filter unit (22) into the filter holding housing (24), the filter unit (22) being compressed in the filter holding housing (24) and adapted to the shape of the filter holding housing (24), the filter holding housing (24) having a trapezoidal cross section perpendicular to the flow direction through the filter assembly (10), and the filter unit (22) being squeezed perpendicular to the flow direction during installation in the filter holding housing (24) in such a way that at least part of folds (38) are merely pushed closer together such that they are partially compressed in an oblique orientation.

14. Method according to Claim 13, **characterized in that** the filter unit (22) is compressed by the filter holding housing (24) as the filter unit (22) is inserted into the filter holding housing (24).

## Patentansprüche

1. Filterbaugruppe (10) einer Fahrzeugheizungs- oder Fahrzeugklimaanlage, mit
- einer Filtereinheit (22), die ein Filterelement (26) mit Falten (38) und einen Filterelementrahmen (28) aufweist, und
- einem Filteraufnahmegehäuse (24), in das die Filtereinheit (22) lösbar eingesetzt ist,
wobei in einem Auslieferungszustand
- die Filtereinheit (22) einen im Wesentlichen rechteckigen Querschnitt senkrecht zur Strömungsrichtung durch die Filterbaugruppe (10), einen oberen Rand (30), einen unteren Rand (32) sowie gegenüberliegende seitliche Ränder (34, 36) aufweist und Falten (38) des Filterelements (26) parallel zu gegenüberliegenden seitlichen Rändern (34, 36) verlaufen; und
- das Filterelement (26) im Wesentlichen quaderförmig ist,
und wobei in einem eingebauten Zustand
- die Filtereinheit (22) im Filteraufnahmegehäuse (24) so komprimiert ist, dass sie einen vom Auslieferungszustand abweichenden, an das Filteraufnahmegehäuse (24) angepassten Querschnitt senkrecht zur Strömungsrichtung durch die Filterbaugruppe (10) aufweist,
**dadurch gekennzeichnet, dass** das Filteraufnahmegehäuse (24) einen trapezförmigen Querschnitt senkrecht zur Strömungsrichtung durch die Filterbaugruppe (10) aufweist und dass der Filterelementrahmen (28) zumindest in Abschnitten zumindest teilweise flexibel ist und das Filterelement (26) umgibt und stabilisiert,
wobei die Filtereinheit (22) während des Einbaus in das Filteraufnahmegehäuse (24) senkrecht zur Strömungsrichtung zusammengedrückt wird, so dass zumindest ein Teil der Falten (38) lediglich zusammengeschoben wird, so dass sie in einer schrägen Ausrichtung teilweise komprimiert werden.

2. Filterbaugruppe nach Anspruch 1, **dadurch gekennzeichnet, dass** in eingebautem Zustand der Filtereinheit (22) zumindest einer der Ränder (30, 32, 34, 36) der Filtereinheit (22) gegenüber dem Auslieferungszustand quer zur Strömungsrichtung gestaucht ist.

3. Filterbaugruppe nach einem der Ansprüche 1 oder 2, **dadurch gekennzeichnet, dass** maximal einige der Ränder (30, 32, 34, 36) der Filtereinheit (22) in eingebautem Zustand undeformiert sind.

4. Filterbaugruppe nach einem der vorhergehenden Ansprüche, **dadurch gekennzeichnet, dass** die Filtereinheit (22) in eingebautem Zustand in einer Ebene quer zur Strömungsrichtung einen trapezförmigen Querschnitt aufweist.

5. Filterbaugruppe nach einem der vorhergehenden Ansprüche, **dadurch gekennzeichnet, dass** die Filtereinheit (22) in eingebautem Zustand in Strömungsrichtung gebogen ist.

6. Filterbaugruppe nach einem der vorhergehenden Ansprüche, **dadurch gekennzeichnet, dass** die Filtereinheit (22) im eingebauten Zustand quer zur Längserstreckung der Falten (38) deformiert ist.

7. Filterbaugruppe nach einem der vorhergehenden Ansprüche, **dadurch gekennzeichnet, dass** das Filteraufnahmegehäuse (24) an einer Seite, vorzugsweise an der Unterseite, geöffnet ist und an dieser Seite einen abnehmbaren Deckel (37) aufweist, um das Filteraufnahmegehäuse (24) seitlich zu schließen.

8. Filtereinheit zum Einbau in eine Filterbaugruppe (10) nach einem der vorhergehenden Ansprüche, wobei die Filtereinheit ein Filterelement (26) mit Falten (38) und einen Filterelementrahmen (28) umfasst und die Filtereinheit (22) in einem Auslieferungszustand einen im Wesentlichen rechteckigen Querschnitt senkrecht zur Strömungsrichtung durch die Filterbaugruppe (10), einen oberen Rand (30), einen unteren Rand (32) sowie gegenüberliegende seitliche Ränder (34, 36) aufweist und Falten (38) des Filterelements (26) parallel zu gegenüberliegenden seitlichen Rändern (34, 36) verlaufen; und wobei die Filtereinheit (22) in einem eingebauten Zustand im Filteraufnahmegehäuse (24) so komprimierbar ist, dass sie einen vom Auslieferungszustand abweichenden, an das Filteraufnahmegehäuse (24) angepassten Querschnitt senkrecht zur Strömungsrichtung durch die Filterbaugruppe (10) aufweist, **dadurch gekennzeichnet, dass** die Filtereinheit (22) während des Einbaus in das Filteraufnahmegehäuse (24) senkrecht zur Strömungsrichtung zusammendrückbar ist, so dass zumindest ein Teil der Falten (38) lediglich zusammengeschoben werden kann, so dass sie in einer schrägen Ausrichtung teilweise komprimiert werden können, und dass der Filterelementrahmen (28) das Filterelement (26) stabilisiert und das Filterelement (26) an den Rändern zumindest teilweise umgibt, wobei der Filterelementrahmen (28) unterschiedlich steife Abschnitte hat und/oder als offener Rahmen ausgebildet ist.

9. Filtereinheit nach Anspruch 8, **dadurch gekennzeichnet, dass** der Filterkörperrahmen (28) an zumindest einem Rand (30, 32, 34, 36) aus einem flexiblen Material hergestellt ist oder an zumindest einem Rand (30, 32, 34, 36) offen ist.

10. Filtereinheit nach einem der Ansprüche 8 und 9, **dadurch gekennzeichnet, dass** der Filterkörperrahmen (28) an zwei oder drei Rändern (30, 32, 34, 36) aus einem starren Material hergestellt ist.

11. Filtereinheit nach einem der Ansprüche 8 bis 10, **dadurch gekennzeichnet, dass** der Filterkörperrahmen (28) zumindest teilweise aus einem flexiblen Band, insbesondere einem Textilband hergestellt ist.

12. Filtereinheit nach einem der Ansprüche 7 bis 11, **dadurch gekennzeichnet, dass** der Filterkörperrahmen (28) zumindest teilweise aus einem Zellulosematerial und/oder aus einem Kunststoffmaterial hergestellt ist.

13. Verfahren zur Herstellung einer Filterbaugruppe nach einem der vorhergehenden Ansprüche, mit den folgenden Schritten:
- Bereitstellen einer Filtereinheit (22) und eines Filteraufnahmegehäuses (24),
- Einsetzen und Fixieren der Filtereinheit (22) in das Filteraufnahmegehäuse (24), wobei die Filtereinheit (22) im Filteraufnahmegehäuse (24) komprimiert und an die Form des Filteraufnahmegehäuses (24) angepasst wird, wobei das Filteraufnahmegehäuse (24) einen trapezförmigen Querschnitt senkrecht zur Strömungsrichtung durch die Filterbaugruppe (10) aufweist und wobei die Filtereinheit (22) während des Einbaus in das Filteraufnahmegehäuse (24) senkrecht zur Strömungsrichtung zusammengedrückt wird, so dass zumindest ein Teil der Falten (38) lediglich zusammengeschoben wird, so dass sie in einer schrägen Ausrichtung teilweise komprimiert werden.

14. Verfahren nach Anspruch 13, **dadurch gekennzeichnet, dass** die Filtereinheit (22) beim Einsetzen der Filtereinheit (22) in das Filteraufnahmegehäuse (24) vom Filteraufnahmegehäuse (24) komprimiert wird.

## Revendications

1. Ensemble filtrant (10) pour système de chauffage de véhicule ou de climatisation de véhicule, comprenant
- une unité filtrante (22) comprenant un élément filtrant (26) doté de plis (38) et un cadre (28) d'élément filtrant, et
- un boîtier (24) de maintien de filtre dans lequel l'unité filtrante (22) est insérée de façon détachable,
à l'état de livraison,
- l'unité filtrante (22) présentant une section droite sensiblement rectangulaire perpendiculairement à la direction d'écoulement à travers l'ensemble filtrant (10), un bord supérieur (30), un bord inférieur (32) et des bords latéraux opposés (34, 3,6), et des plis (38) de l'élément filtrant (26) s'étendant parallèlement à des bords latéraux opposés (34, 36), et
- l'élément filtrant (26) étant sensiblement parallélépipédique,
et à l'état installé,
- l'unité filtrante (22) étant comprimée dans le boîtier (24) de maintien de filtre de telle manière qu'elle présente une section droite perpendiculairement à la direction d'écoulement à travers l'ensemble filtrant (10) qui s'écarte de l'état de livraison et est adaptée au boîtier (24) de maintien de filtre,
**caractérisé en ce que** le boîtier (24) de maintien de filtre présente une section droite trapézoïdale perpendiculairement à la direction d'écoulement à travers l'ensemble filtrant (10), et **en ce que** le cadre (28) d'élément filtrant est au moins partiellement souple au moins par tronçons et entoure et stabilise l'élément filtrant (26),
l'unité filtrante (22) étant écrasée perpendiculairement à la direction d'écoulement pendant l'installation dans le boîtier (24) de maintien de filtre de telle manière qu'au moins une partie des plis (38) soient simplement rapprochés les uns des autres de telle façon qu'ils soient partiellement comprimés dans une orientation oblique.

2. Ensemble filtrant selon la revendication 1, **caractérisé en ce que**, à l'état installé de l'unité filtrante (22), au moins un des bords (30, 32, 34, 36) de l'unité filtrante (22) est écrasé transversalement par rapport à la direction d'écoulement, par comparaison à l'état de livraison.

3. Ensemble filtrant selon l'une ou l'autre des revendications 1 ou 2, **caractérisé en ce qu'**au plus certains des bords (30, 32, 34, 36) de l'unité filtrante (22) ne sont pas déformés à l'état installé.

4. Ensemble filtrant selon l'une des revendications précédentes, **caractérisé en ce que**, à l'état installé, l'unité filtrante (22) présente une section droite trapézoïdale dans un plan transversal à la direction d'écoulement.

5. Ensemble filtrant selon l'une des revendications précédentes, **caractérisé en ce que**, à l'état installé, l'unité filtrante (22) est courbée dans la direction d'écoulement.

6. Ensemble filtrant selon l'une des revendications précédentes, **caractérisé en ce que** l'unité filtrante (22) est déformée transversalement par rapport à l'étendue longitudinale des plis (38) à l'état installé.

7. Ensemble filtrant selon l'une des revendications précédentes, **caractérisé en ce que** le boîtier (24) de maintien de filtre est ouvert sur un côté, de préférence sur le dessous, et comporte un couvercle amovible (37) de ce côté pour permettre au boîtier (24) de maintien de filtre d'être fermé sur le côté.

8. Unité filtrante for installation in un ensemble filtrant (10) selon l'une des revendications précédentes, l'unité filtrante comportant un élément filtrant (26) doté de plis (38) et un cadre (28) d'élément filtrant, et à l'état de livraison, l'unité filtrante (22) présentant une section droite sensiblement rectangulaire perpendiculairement à la direction d'écoulement à travers l'ensemble filtrant (10), un bord supérieur (30), un bord inférieur (32) et des bords latéraux opposés (34, 36), et des plis (38) de l'élément filtrant (26) s'étendant parallèlement à des bords latéraux opposés (34, 36), et à l'état installé, l'unité filtrante (22) pouvant être comprimée dans le boîtier (24) de maintien de filtre de telle manière qu'elle présente une section droite perpendiculairement à la direction d'écoulement à travers l'ensemble filtrant (10) qui s'écarte de l'état de livraison et qui puisse être est adaptée au boîtier (24) de maintien de filtre, **caractérisée en ce que** l'unité filtrante (22) peut être écrasée perpendiculairement à la direction d'écoulement pendant l'installation dans le boîtier (24) de maintien de filtre de telle manière qu'au moins une partie des plis (38) puissent être simplement rapprochés les uns des autres de telle façon qu'ils puissent être partiellement comprimés dans une orientation oblique, et **en ce que** le cadre (28) d'élément filtrant stabilise l'élément filtrant (26) et entoure au moins partiellement l'élément filtrant (26) au niveau des bords, le cadre (28) d'élément filtrant comprenant des tronçons de rigidité différente et / ou étant conçu comme un cadre ouvert.

9. Unité filtrante selon la revendication 8, **caractérisée en ce que** le cadre (28) d'élément filtrant est produit à partir d'un matériau souple au moins sur un bord (30, 32, 34, 36) ou est ouvert au moins sur un bord (30, 32, 34, 36).

10. Unité filtrante selon l'une ou l'autre des revendications 8 et 9, **caractérisée en ce que** le cadre (28) d'élément filtrant est produit à partir d'un matériau rigide sur deux ou trois bords (30, 32, 34, 36).

11. Unité filtrante selon l'une des revendications 8 à 10, **caractérisée en ce que** le cadre (28) d'élément filtrant est produit au moins partiellement à partir d'un bande souple, en particulier une bande textile.

12. Unité filtrante selon l'une des revendications 7 à 11, **caractérisée en ce que** le cadre (28) d'élément filtrant est produit au moins partiellement à partir d'un matériau cellulosique et / ou partir d'une matière plastique.

13. Procédé de production d'un ensemble filtrant selon l'une des revendications précédentes, comportant les étapes suivantes :
- mise en place d'une unité filtrante (22) et d'un boîtier (24) de maintien de filtre,
- insertion et fixation de l'unité filtrante (22) dans le boîtier (24) de maintien de filtre, l'unité filtrante (22) étant comprimée dans le boîtier (24) de maintien de filtre et adaptée à la forme du boîtier (24) de maintien de filtre, le boîtier (24) de maintien de filtre présentant une section droite trapézoïdale perpendiculairement à la direction d'écoulement à travers l'ensemble filtrant (10), et l'unité filtrante (22) étant écrasée perpendiculairement à la direction d'écoulement pendant l'installation dans le boîtier (24) de maintien de filtre de telle manière qu'au moins une partie des plis (38) soient simplement rapprochés les uns des autres de telle façon qu'ils soient partiellement comprimés dans une orientation oblique.

14. Procédé selon la revendication 13, **caractérisé en ce que** l'unité filtrante (22) est comprimée par le boîtier (24) de maintien de filtre tandis que l'unité filtrante (22) est insérée dans le boîtier (24) de maintien de filtre.
